(19) Europäisches Patentamt / European Patent Office / Office européen des brevets

(11) **EP 3 118 973 A1**

(12) **EUROPEAN PATENT APPLICATION**
published in accordance with Art. 153(4) EPC

(43) Date of publication:
**18.01.2017 Bulletin 2017/03**

(51) Int Cl.:
**H02K 3/04** *(2006.01)*

(21) Application number: **14885784.0**

(22) Date of filing: **12.03.2014**

(86) International application number:
**PCT/JP2014/056394**

(87) International publication number:
**WO 2015/136632 (17.09.2015 Gazette 2015/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Hitachi, Ltd.**
**Chiyoda-ku**
**Tokyo 100-8280 (JP)**

(72) Inventors:
• **HORI Masahiro**
  **Tokyo 100-8280 (JP)**
• **KIMURA Mamoru**
  **Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **ROTATING ELECTRIC MACHINE**

(57) The purpose of the present invention is to provide a rotating electric machine in which the axial direction lengths of the coil ends of distributed winding coils are reduced while preventing interference. A rotating electric machine includes a stator and a rotor disposed via an air gap with respect to the stator. The stator has coil slots formed in a stator iron core and double-layer distributed winding coils disposed in the coil slots. The coils include a bottom coil disposed on the outer circumferential side in the coil slots and an upper coil disposed on the inner circumferential side of the coil slots in the coil slots. The bottom coil and the upper coil are bent in a radial direction at coil ends thereof, wherein the distance from a region of the upper coil bent in the radial direction at the coil end to the coil slot side is longer than the distance from a region of the bottom coil bent in the radial direction at the coil end to the coil slot side.

[FIG. 4]

# Description

## Technical Field

The present invention relates to a rotating electric machine, and particularly relates to a coil structure suitable for a rotating electric machine having a large diameter such as for wind power generation, an output of which is in a range of several hundred kW to several MW.

## Background Art

In recent years, power generation systems using natural energy such as wind power generation and solar power generation are attracting a lot of attention for preventing global warming. Among them, a wind power generation system using wind power is introduced in many countries.

In a wind power generator, a nacelle which houses a power generator and a speed increasing gear is arranged in an upper part of a tower. Here, if the total weight of the nacelle can be reduced, the weight supported by the tower is reduced, thereby designing the tower and foundations to have lower strength, which can reduce costs. Accordingly, the power generator is required to be reduced in weight. However, the power generator for wind power has a large capacity and an outer diameter of the power generator is large, therefore, a coil crossover of the power generator is elongated and coil ends are elongated in an axial direction. Accordingly, the length of the coil ends may be a factor that results in enlarging a frame of the power generator and increasing the weight of the power generator. Therefore, the coil ends are desired to be reduced in size.

Concerning the size reduction of the coil ends, for example, Patent Literature 1 can be cited. In the example, coil ends of a concentrated winding coil are bent in a radial direction so as to contact a stator core. Thus, the reduction of axial direction lengths and improvement in heat radiation performance of the coil ends can be realized.

## Citation List

### Patent Literature

Patent Literature 1: JP-A-2000-245089

## Summary of Invention

## Technical Problem

As the concentrated winding coil is targeted in Patent Literature 1, the coil ends can be easily bent. However, two types of coils are arranged in coil slots provided in the stator iron core in double-layer distributed winding coils suitable for the power generator having a large capacity, therefore, coils in the coil slots interfere with one another when the coil ends are bent in the radial direction as in Patent Literature 1.

The present invention has been made in view of the above points, and an object thereof is to provide a rotating electric machine capable of reducing axial direction lengths of the coil ends of the distributed winding coils while preventing interference.

## Solution to Problem

According to an embodiment of the present invention, there is provided a rotating electric machine including a stator and a rotor disposed via an air gap with respect to the stator, in which the stator has coil slots formed in a stator iron core and double-layer distributed winding coils disposed in the coil slots, the coils include a bottom coil disposed on the outer circumferential side in the coil slot and an upper coil disposed in the inner circumferential side of the coil slot in the coil slot, the bottom coil and the upper coil are bent in a radial direction at coil ends thereof, and the distance from a region of the upper coil bent in the radial direction at the coil end to the coil slot side is longer than the distance from a region of the bottom coil bent in the radial direction at the coil end to the coil slot side. Advantageous Effects of Invention

According to the present invention, it is possible to provide a rotating electric machine in which the axial direction lengths of the coil ends of distributed winding coils are reduced while preventing interference.

## Brief Description of Drawings

[Fig. 1] Fig. 1 is a cross-sectional view in an axial direction of a rotating electric machine.
[Fig. 2] Fig. 2 is a cross-sectional view in a circumferential direction of a stator of the rotating electric machine.
[Fig. 3] Fig. 3 is a perspective view of coil ends for comparison.
[Fig. 4] Fig. 4 is a perspective view of a coil end according to Embodiment 1.
[Fig. 5] Fig. 5 shows comparison views of axial direction lengths of coil ends for comparison and coil ends according to Embodiment 1.
[Fig. 6] Fig. 6 is a projection view of a coil according to Embodiment 1.
[Fig. 7] Fig. 7 is a view showing size conditions in which the coil ends according to Embodiment 1 do not interfere with adjacent coils.
[Fig. 8] Fig. 8 is a perspective view of a stator in which the plural number of coils according to Embodiment 1 are disposed in a stator iron core.
[Fig. 9] Fig. 9 is a view showing an example of a method of manufacturing the coil according to Embodiment 1.

[Fig. 10] Fig. 10 is a projection view of coil ends according to Embodiment 2.

[Fig. 11] Fig. 11 is a schematic structure view showing a wind power generation system to which a rotating electric machine according to Embodiment 3 is applied.

Description of Embodiments

Hereinafter, a rotating electric machine according to the present invention will be explained based on shown embodiments. In respective embodiments, explanation will be made by giving the same symbols to the same components. The following description is for examples of embodiments and the embodiments of the present invention are not intended to be limited to specific examples.

Example 1

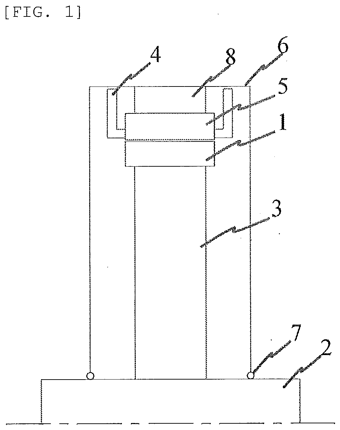

Fig. 1 shows a rotating electric machine according to Embodiment 1 of the present invention. Fig. 1 is a cross-sectional view in an axial direction of a rotating electric machine with an output of several MW, driving at rotational speed of several hundred min$^{-1}$ to several thousand min$^{-1}$.

A shaft 2 is connected to an inner diameter side of a rotor 1 through spiders 3, and a stator 5 to which coils 4 are fitted is arranged so as to face the rotor 1 via an air gap. These components are housed in a frame 6, and a bearing 7 is arranged between the shaft 2 and the frame 6. The stator 5 and the frame 6 are fixed by spiders 8. Plural spiders 3 and 8 are arranged over the entire circumference for keeping the strength sufficiently, and portions between respective spiders can be used as flow paths of cooling air.

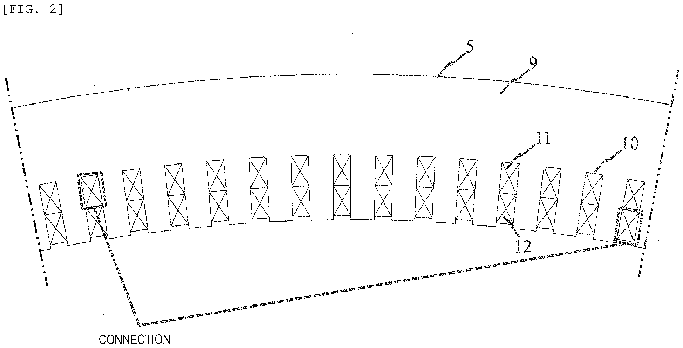

Fig. 2 shows a cross-sectional view in a radial direction of the stator 5. A stator iron core 9 is provided with coil slots 10 and the coils 4 are arranged thereinside. The coils in the embodiment are double-layer distributed winding coils, and two coils are arranged in the coil slots. Here, a coil arranged on the outer circumferential side in the coil slot is a bottom coil 11, and a coil arranged on the inner circumferential side or the entrance side of the coil slot is an upper coil 12. As the coils 4 are distributed winding coils, the bottom coil 11 and the upper coil 12 which are apart from each other for an arbitrary number of coil slots are connected as shown in Fig. 2.

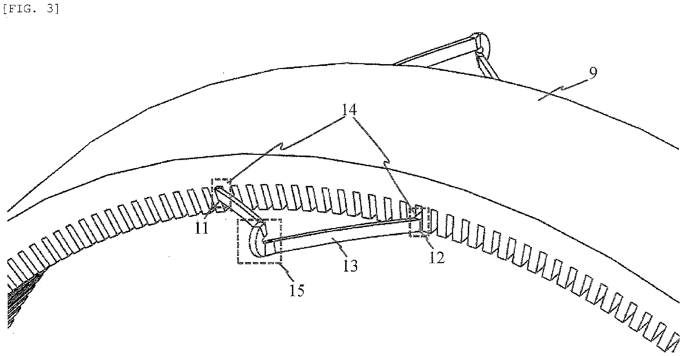

Fig. 3 shows a perspective view in a case where coils for comparison to which the structure of the present invention is not applied are arranged in the stator iron core 9. As shown in Fig. 3, the bottom coil 11 and the upper coil 12 are connected as coils. Here, a portion of the coil protruding from the stator iron core 9 is called a coil end 13, and particularly, a region closer to the coil slot than a region bent in the radial direction in the coil end or a region in front of a bending part of the coil closest to the stator iron core 9 is called a coil-end straight portion 14. In the distributed winding coils, a folded portion 15 is provided at the coil end. This is because distances from the rotation center differs in the bottom coil 11 and the upper coil 12. The structure can prevent interference between adjacent coils. As can be seen from Fig. 3, the coil end 13 extends in the axial direction for preventing interference with other coils. The structure may be a factor that results in increasing the axial direction length of the power generator and increasing the size of the frame 6, and further, increasing the weight and costs.

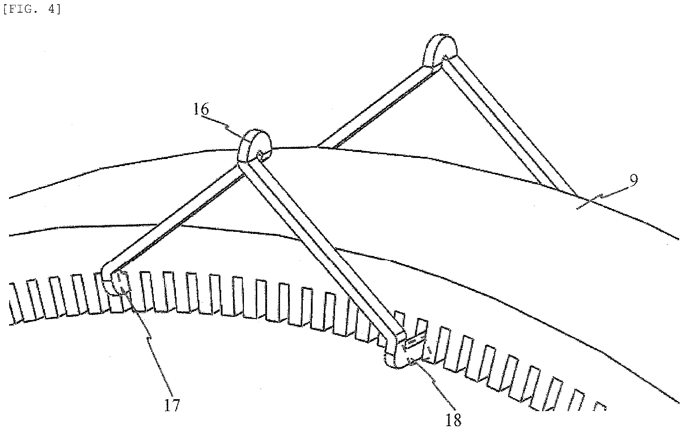

Fig. 4 shows a coil end 16 according to the present invention in contract to the related-art coil end 13 shown in Fig. 3. As shown in Fig. 4, the coil end 16 is bent in the radial direction. Accordingly, the axial direction length of the coil end can be reduced and the body size of the power generator is reduced. An end portion of the coil-end straight portion 14 of the upper coil 12 is thickened in the radial direction, and the thickened end portion of the coil-end straight portion 14 of the upper coil 12 is connected to a region bent in the radial direction in the upper coil 12, and the region bent in the radial direction in the upper coil 12 extends toward the coil slot side in which the other end of the coil end is housed concerning the circumferential direction of the stator iron core. An end portion of the coil-end straight portion 14 of the bottom coil 11 is thickened in the radial direction, and the thickened end portion of the coil-end straight portion 14 of the bottom coil 11 is connected to a region bent in the radial direction in the bottom coil 11, and the region bent in the radial direction in the bottom coil 11 extends toward the coil slot side in which the other end of the coil end is housed concerning the circumferential direction of the stator iron core. The regions bent in the radial direction in respective coils are coil end crossovers both in the upper coil and the bottom coil, and both coil end crossovers do not spatially overlap each other as they are displaced in a rotational axis direction. Both regions are connected at respective end portions.

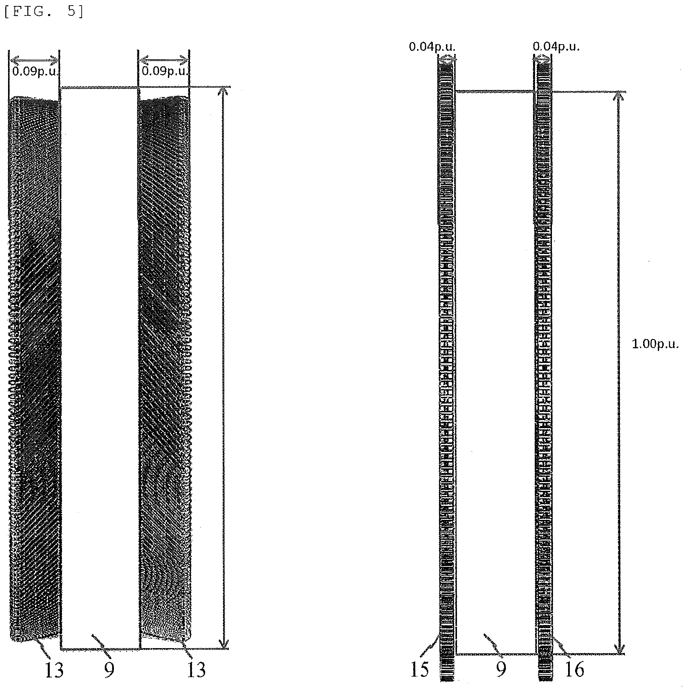

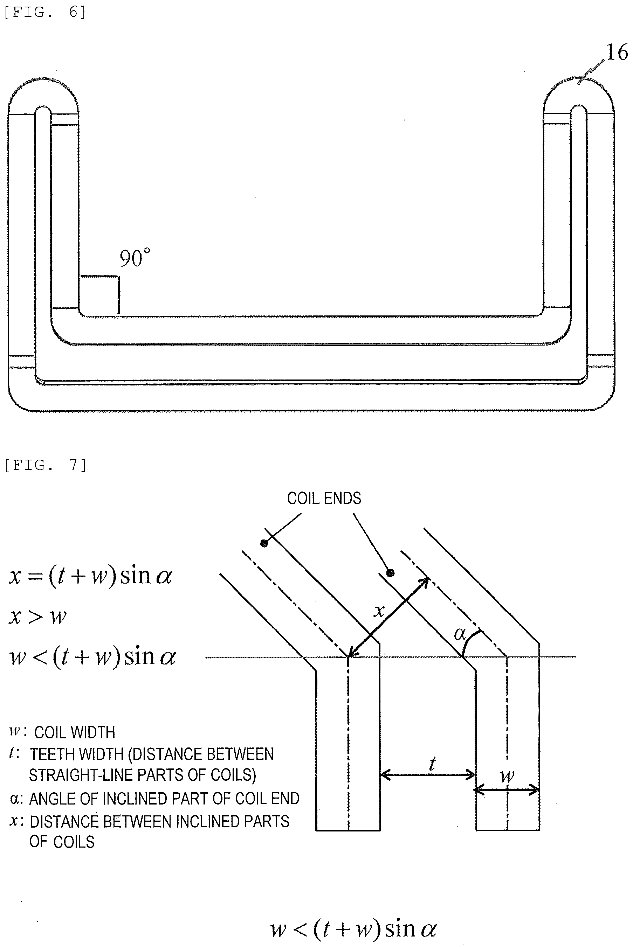

Fig. 5 shows an example of reduction in the body size. The sizes are standardized by setting a diameter of the stator iron core 9 as "1". The coil is folded to the opposite side of the rotational axis so that an angle made by the coil-end straight portion becomes 90° as shown in Fig. 6. It is possible to confirm from Fig. 5 that the axial direction length is half or less by the coil end according to the present invention as compared with the coil end in related art.

A distance from a region of the upper coil 12 bent in the radial direction at the coil end to the coil slot side is set to be longer than a distance from a region of the bottom coil 11 bent in the radial direction at the coil end. More specifically, a coil-end straight portion 18 of the upper coil 12 is made longer than a coil-end straight portion 17 of the bottom coil 11 in the embodiment as shown in Fig. 4. According to the structure, it is possible to prevent interference between the bottom coil and the upper coil without complicating the coil ends.

Additionally, Fig. 7 shows size conditions in which adjacent coil ends do not interfere with one another. When a coil width along the circumferential direction of the stator iron core is "w", a teeth width formed between adjacent coil slots is "t" and an angle made between the coil-end straight portion and an inclined part of the coil end crossover is "α", it is necessary to satisfy the following formula for preventing interference between coils.

$$w < (t+w)\sin\alpha$$

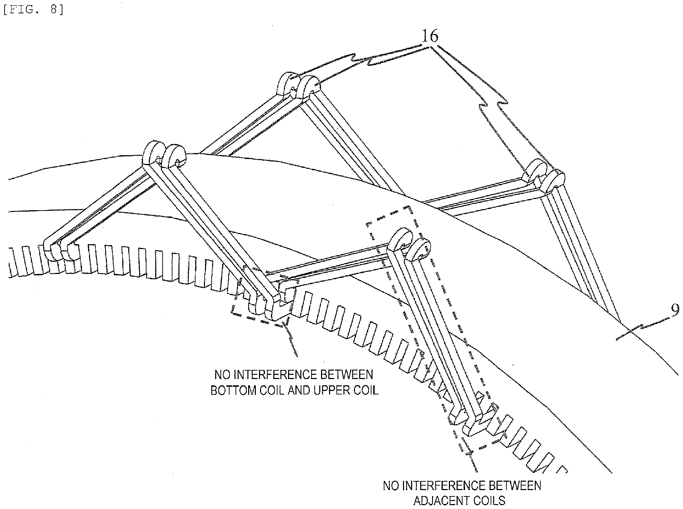

Fig. 8 shows a perspective view of the stator satisfying the above conditions, in which the plural number of coils are arranged. It is possible to confirm from Fig. 8 that interference does not occur between adjacent coils and between the bottom coil and the upper coil.

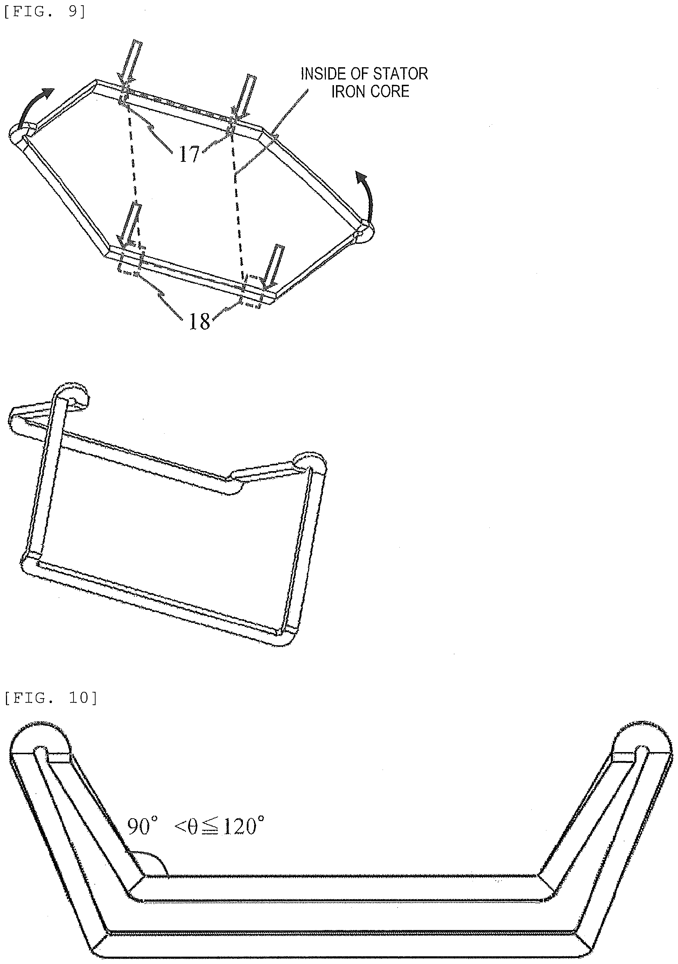

Fig. 9 shows an example of a method of forming the coil according to the embodiment. First, the coil shown for comparison is made, after that, the coil is folded in an arrow direction while supporting portions shown by white arrows in the drawing. Accordingly, the coil ends can be made so that the length of the coil-end straight portion 18 of the upper coil is longer than the coil-end straight portion 17 of the bottom coil. It is necessary to form a radius of the folded portion to be sufficiently long to prevent the insulation of the coil from being broken.

The coil end according to the embodiment can be applied to any kind of rotating electric machine as long as they are rotating electric machines having the double-layer distributed winding coils. For example, they are a permanent magnet type rotating electric machine provided with permanent magnets in the rotor, an induction motor rotating electric machine provided with a squirrel cage winding in the rotor, a wound-rotor induction motor rotating electric machine provided with a three-phase winding in the rotor and so on. Here, the wound-rotor induction motor rotating electric machine has the double-layer distributed winding coils also in the rotor, therefore, the embodiment can be applied also to the rotor.

Embodiment 2

Fig. 10 shows a rotating electric machine according to Embodiment 2 of the present invention.

Although the coil end is bent so that the angle made by the coil-end straight portion is 90° as shown in Fig. 6 in the above Embodiment 1, the angle may be larger than 90° and equal to or smaller than 120° as shown in Fig. 10. Accordingly, the axial direction length of the coil end can be approximately half or less, and further, the outer diameter of the rotating electric machine is reduced as compared with Embodiment 1, thereby adjusting the outer diameter of the rotating electric machine and the axial length in the optimum balance so as to correspond to specifications.

Embodiment 3

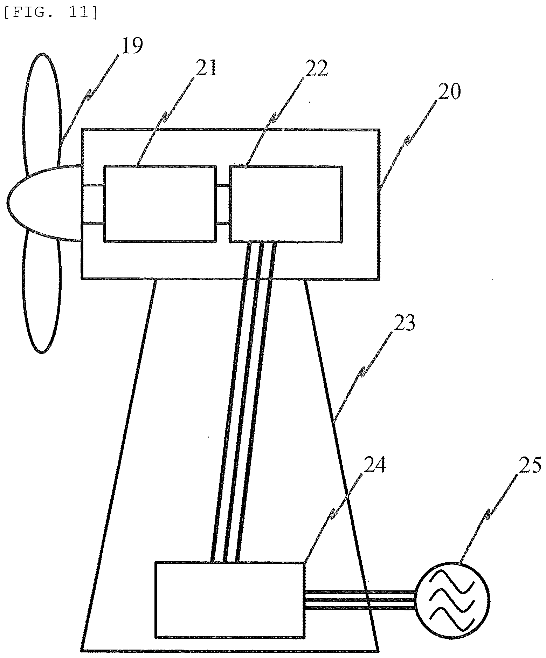

Fig. 11 shows an embodiment in which the present invention is applied to a wind power generation system. When the blades 19 receive the wind, blades 19 rotate and rotating (machine) energy is transmitted to a power generator 22 through a speed increasing gear 21 housed in a nacelle 20. Machine energy is converted into electrical energy by the power generator 22, and the electric energy is adjusted to have a frequency and a voltage corresponding to a system 25 by a power converter 24 housed in a tower 23 to be fed to the system 25.

When the present invention is applied to the power generator 22, the size and weight can be reduced, which contributes to increase of the space and reduction of weight in the nacelle 20, and further, the tower 23 can be simplified by the reduction of weight in the nacelle, which can reduce costs.

The present invention can be also applied to a gearless system in which the speed increasing gear 21 is removed, an electric/mechanical integrated system in which the power converter 24 is incorporated in the power generator and a hydraulic system in which the speed increasing gear 21 has a variable speed mechanism by hydraulic pressure.

The present invention can be applied to any application using the rotating electric machine having the double-layer distributed winding coils.

Reference Signs List

| | |
|---|---|
| 1 | rotor |
| 2 | shaft |
| 3 | spider |
| 4 | coil |
| 5 | stator |
| 6 | frame |
| 7 | bearing |
| 8 | spider |
| 9 | stator iron core |
| 10 | coil slot |
| 11 | bottom coil |
| 12 | upper coil |
| 13 | coil end |
| 14 | coil-end straight portion |
| 15 | folded portion |
| 16 | coil end (present invention) |
| 17 | coil-end straight portion of bottom coil |
| 18 | coil-end straight portion of upper coil |
| 19 | blade |
| 20 | nacelle |
| 21 | speed increasing gear |
| 22 | power generator |
| 23 | tower |
| 24 | power converter |
| 25 | system |

**Claims**

1. A rotating electric machine comprising:

    a stator; and
    a rotor disposed via an air gap with respect to the stator,
    wherein the stator has coil slots formed in a stator iron core and double-layer distributed winding coils disposed in the coil slots,
    the coils include a bottom coil disposed on the outer circumferential side in the coil slot and an upper coil disposed in the inner circumferential side of the coil slot in the coil slot,
    the bottom coil and the upper coil are bent in a radial direction at coil ends thereof, and
    the distance from a region of the upper coil bent in the radial direction at the coil end to the coil slot side is longer than the distance from a region of the bottom coil bent in the radial direction at the coil end to the coil slot side.

2. The rotating electric machine according to claim 1, wherein the coil end has a coil-end straight portion on a side closer to the coil slot than the region bent in the radial direction, and
    the coil-end straight portion of the upper coil is formed to be longer than the coil-end straight portion of the bottom coil.

3. The rotating electric machine according to claim 1 or 2,
    wherein regions bent in the radial direction of the stator iron core in coil ends of the coil are coil end crossovers, and
    the coil end crossover of the upper coil is connected to the coil end crossover of the bottom coil.

4. The rotating electric machine according to claim 2, wherein an end portion of the coil-end straight portion of the upper coil is thickened in the radial direction, the thickened end portion of the coil-end straight portion of the upper coil is connected to a region bent in the radial direction in the upper coil and the region bent in the radial direction in the upper coil extends toward the coil slot side in which the other end of the coil end is housed concerning the circumferential direction of the stator iron core,
    an end portion of the coil-end straight portion of the bottom coil is thickened in the radial direction,
    the thickened end portion of the coil-end straight portion of the bottom coil is connected to a region bent in the radial direction in the bottom coil, and the region bent in the radial direction in the bottom coil extends toward the coil slot side in which the other end of the coil end is housed concerning the circumferential direction of the stator iron core,
    the region bent in the radial direction in the upper coil is a coil end crossover in the upper coil,
    the region bent in the radial direction in the bottom coil is a coil end crossover in the bottom coil, and
    the coil end crossover in the upper coil and the coil end crossover in the bottom coil do not overlap each other and are connected at respective end portions.

5. The rotating electric machine according to claim 3 or 4,
    wherein teeth are formed between adjacent coil slots,
    when a coil width is "w", a teeth width is "t" and an angle made between the coil-end straight portion and an inclined part of the coil end crossover is "$\alpha$",
    $w < (t+w)\sin\alpha$ is satisfied.

6. The rotating electric machine according to any one of claims 1 to 5,
    wherein an angle made by the coil-end straight portion and the bent region of the coil end is 90 degrees or more.

7. The rotating electric machine according to any one of claims 1 to 6,
    wherein the rotating electric machine is a permanent magnet type rotating electric machine provided with at least one permanent magnet for each pole in a rotor core of the rotor.

8. The rotating electric machine according to any one of claims 1 to 6,
    wherein the rotating electric machine is an induction motor rotating electric machine provided with a squirrel cage winding in the rotor core of the rotor.

9. The rotating electric machine according to any one of claims 1 to 6,
    wherein the rotating electric machine is a wound-rotor induction rotating electric machine provided with a three-phase winding formed by double-layer full-pitch winding coils in the rotor core of the rotor.

10. The rotating electric machine according to claim 9, wherein the coil end of the three-phase winding wound in the rotor core is further bent in the radial direction.

11. A wind power generation system comprising:

    a wind turbine rotor rotating by receiving wind;
    the rotating electric machine according to any one of claims 1 to 10, which is connected to the wind turbine rotor through a main shaft;
    a nacelle housing the rotating electric machine thereinside; and
    a tower supporting the nacelle.

[FIG. 1]

[FIG. 2]

CONNECTION

[FIG. 3]

[FIG. 4]

[FIG. 5]

[FIG. 6]

$90°$

16

[FIG. 7]

COIL ENDS

$$x = (t + w)\sin\alpha$$

$$x > w$$

$$w < (t + w)\sin\alpha$$

$w$: COIL WIDTH
$t$: TEETH WIDTH (DISTANCE BETWEEN STRAIGHT-LINE PARTS OF COILS)
$\alpha$: ANGLE OF INCLINED PART OF COIL END
$x$: DISTANCE BETWEEN INCLINED PARTS OF COILS

$$w < (t + w)\sin\alpha$$

[FIG. 8]

NO INTERFERENCE BETWEEN
BOTTOM COIL AND UPPER COIL

NO INTERFERENCE BETWEEN
ADJACENT COILS

[FIG. 9]

INSIDE OF STATOR
IRON CORE

17

18

[FIG. 10]

$90° < \theta \leqq 120°$

[FIG. 11]

## INTERNATIONAL SEARCH REPORT

| International application No. |
| --- |
| PCT/JP2014/056394 |

**A. CLASSIFICATION OF SUBJECT MATTER**
*H02K3/04*(2006.01)i

According to International Patent Classification (IPC) or to both national classification and IPC

**B. FIELDS SEARCHED**

Minimum documentation searched (classification system followed by classification symbols)
H02K3/04

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2004-32892 A  (Denso Corp.), 29 January 2004 (29.01.2004), paragraphs [0052] to [0112]; fig. 1, 12 & US 2004/0007931 A1    & EP 1376818 A2 | 1-11 |
| Y | JP 2008-236924 A  (Hitachi, Ltd.), 02 October 2008 (02.10.2008), paragraphs [0011] to [0055]; fig. 1 to 8 & US 2008/0231136 A1 | 1-11 |
| Y | JP 57-206243 A  (Tokyo Shibaura Electric Co., Ltd.), 17 December 1982 (17.12.1982), page 2, lower left column, line 13 to lower right column, line 13; fig. 1 to 3 (Family: none) | 8-10 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search   23 May, 2014 (23.05.14) | Date of mailing of the international search report   03 June, 2014 (03.06.14) |
| --- | --- |
| Name and mailing address of the ISA/   Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/056394

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2001-320862 A  (Mitsubishi Electric Corp.), 16 November 2001 (16.11.2001), paragraph [0026]; fig. 1, 14, 28, 32 to 33, 55 & US 2001/0038252 A1 | 10 |
| Y | JP 2005-304271 A  (Hitachi, Ltd.), 27 October 2005 (27.10.2005), paragraphs [0002], [0004] to [0006] (Family: none) | 11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000245089 A